Europäisches Patentamt

European Patent Office

Office européen des brevets

(19)

(11) Veröffentlichungsnummer: **0 009 101**
**A2**

## (12) EUROPÄISCHE PATENTANMELDUNG

(21) Anmeldenummer: 79102739.4

(22) Anmeldetag: 31.07.79

(51) Int. Cl.³: **C 09 D 1/02, C 04 B 19/04,**
**C 09 D 5/18**

(30) Priorität: 25.09.78 DE 2841623

(43) Veröffentlichungstag der Anmeldung: 02.04.80
**Patentblatt 80/7**

(84) Benannte Vertragsstaaten: **AT BE CH FR GB IT NL SE**

(71) Anmelder: **Woellner-Werke, Woellnerstrasse, D-6700**
**Ludwigshafen/Rhein (DE)**

(72) Erfinder: **Neser, Rudolf Peter, Amsterdamerstrasse 1,**
**D-6700 Ludwigshafen / Rhein (DE)**

(74) Vertreter: **Deufel, Paul et al, Patentanwälte MÜLLER-**
**BORé-DEUFEL SCHÖN-HERTEL Siebertstrasse 4,**
**D-8000 München 86 (DE)**

(54) **Brandschutzbeschichtungsmasse.**

(57) Die Erfindung betrifft eine neue Brandschutzbeschichtungsmasse aus einer Alkalisilikatlösung als Bindemittel, die ein wasserglaslösliches nichtionogenes Tensid in gelöster Form enthält, und einem Alkalitrisilikatpulver. Diese Masse besitzt ausgezeichnete feuerhemmende Eigenschaften und ist innerhalb eines breiteren Trisilikatpulverbereiches als bekannte Massen verarbeitbar.

EP 0 009 101 A2

ACTORUM AG

MÜLLER-BORÉ · DEUFEL · SCHÖN · HERTEL

PATENTANWÄLTE

DR. WOLFGANG MÜLLER-BORÉ
(PATENTANWALT VON 1927 - 1975)
DR. PAUL DEUFEL. DIPL.-CHEM.
DR. ALFRED SCHÖN. DIPL.-CHEM.
WERNER HERTEL. DIPL.-PHYS.

ZUGELASSENE VERTRETER BEIM EUROPÄISCHEN PATENTAMT
REPRESENTATIVES BEFORE THE EUROPEAN PATENT OFFICE
MANDATAIRES AGRÉÉS PRÈS L'OFFICE EUROPÉEN DES BREVETS

S/W 28-10 EU

## Brandschutzbeschichtungsmasse

In der DE-AS 2 022 572 wird eine flammsichere, einen brennbaren Werkstoff enthaltende Platte beschrieben, die eine Schicht aus einem bei Brandhitze schaumbildenden wasserlöslichen Silikat, wie zum Beispiel Natrium- oder Kaliumsilikat, und eine sie als Schutzschicht überdeckende weitere Schicht aus einem wasserfesten Material aufweist. Diese Platte zeichnet sich dadurch aus, daß auf einer Grundplatte aus dem brennbaren Werkstoff sich eine erste Schicht aus dem wasserfesten Material, auf dieser Schicht die schaumbildende Schicht und auf dieser wiederum eine zweite Schicht aus dem wasserfesten Material befindet, und daß das wasser-

8 MÜNCHEN 86 · SIEBERTSTR. 4 · POSTFACH 860720 · KABEL: MUEBOPAT · TEL. (089) 474005 · TELEX 5-24285

feste Material durch Zugabe eines Stoffes, wie Dicalciumsilikat, zu dem wasserlöslichen Silikat erzeugt ist, der
mit diesem sich zu einem selbstabbindenden Gemisch verbindet.

Der Zweck dieser Platte besteht darin, durch den besonderen
Schichtaufbau die schaumbildende Schicht gegenüber verschiedenen vor dem eigentlichen Brandfall auftretenden Umweltbedingungen zu schützen und eine Platte zu schaffen, die ihre
feuersicheren Eigenschaften auch unter extremen Umweltbedingungen über sehr lange Zeiträume beibehält.

In der DE-OS 27 25 779 wird eine selbsthärtende Verbindung
auf der Basis von Natriumsilikaten zum Überziehen von Substraten mit einer feuerhemmenden Schicht, die im Falle eines
Brandes aufschwillt, aber wieder erstarrt, ohne zu zerfließen,
beschrieben, die gekennzeichnet ist durch eine wäßrige Lösung von 40 bis 80 Gew.-% wasserlöslicher Silikate sowie, in
Suspension, 20 bis 60 Gew.-% an hydratisierten Silikatteilchen mit 16 bis 20 % Wasser, wobei das Molverhältnis $SiO_2$/-
$Na_2O$ der genannten Silikate zwischen 2 und 3,5 liegt.

Die aus der DE-AS 2 022 572 bekannte flammsichere Platte
besitzt zwar gute Brandschutzeigenschaften, ist jedoch arbeitsaufwendig in der Herstellung und aufgrund ihrer relativ komplizierten Bauweise nur begrenzt einsatzfähig.

Die aus der DE-OS 27 25 779 bekannte Beschichtungsmasse
läßt sich, wie Versuche gezeigt haben, nicht in den angegebenen Grenzen der Zugabe hydratisierter Silikatteilchen
ohne Verwendung von Schutzgas (20 bis 60 Gew.-%) realisieren, sondern nur bei Einhaltung eines Wasserglas : Silikatteilchen-Verhältnisses von 50 : 50 gemäß den angegebenen Beispielen. Bei Einhaltung dieses Verhältnisses ist jedoch die Verarbeitbarkeit (beispielsweise beim Auftragen mittels einer Spachtel) schlecht.

Die Erfindung hat sich daher die Aufgabe gestellt, diese Nachteile zu beseitigen.

Diese Aufgabe wird erfindungsgemäß bei einer Brandschutzbeschichtungsmasse mit einem Bindemittel auf der Grundlage einer Alkalisilikatlösung dadurch gelöst, daß das Bindemittel aus einer Alkalisilikatlösung, wobei diese Lösung ein wasserglaslösliches nichtionogenes Tensid in gelöster Form enthält, und einem Alkalitrisilikatpulver besteht.

Diese Masse besitzt ausgezeichnete feuerhemmende Eigenschaften, ist besser innerhalb eines breiten Trisilikatpulverbereiches als die Masse der DE-OS 27 25 779 verarbeitbar, beispielsweise beim Auftragen mittels einer Spachtel.

Vorzugsweise besteht die Alkalisilikatlösung aus einer Lösung eines Alkalisilikats mit einem Verhältnis $Me_2O:SiO_2$ von 1 : 2,8 - 3,5. Die Alkalisilikatlösung besteht insbesondere aus einer Natriumsilikatlösung oder aus einem Gemisch aus einer Natrium- und einer Kaliumsilikatlösung.

Die Beschichtungsmasse kann zur weiteren Erhöhung der Brandschutzwirkung Harnstoff, Hexamethylentetramin, Borax, Phosphate, Dicyandiamid und/oder Zucker oder zuckerähnliche Stoffe, insbesondere in einer Menge bis zu 10 Gew.-%, insbesondere 0,5 bis 7 Gew.-%, enthalten.

- 4 -

Das in der Masse eingesetzte Alkalitrisilikatpulver besteht vorzugsweise aus Natriumtrisilikat mit einem Verhältnis $Me_2O : SiO_2$ von 1 : 2,8 bis 3,5. Der Alkalitrisilikatpulvergehalt der Alkalisilikatlösung beträgt vorzugsweise 25 bis 70 Gew.-%, insbesondere 40 bis 60 Gew.-%.

Das erfindungsgemäß eingesetzte Tensid verbessert die Verarbeitbarkeit und verlängert die Verarbeitungzeit innerhalb breiter Grenzen des Silikatfeststoffgehalts. Es wird vorzugsweise in Mengen von 0,05 - 0,8 Gew.-%, bezogen auf die Masse, eingesetzt. Als Tenside kommen beispielsweise Alkylglukoside in Frage, beispielsweise Triton BG 10.

Die die Thixotropie erhöhende Substanz wird vorzugsweise zugesetzt, um ein Ablaufen der Masse an vertikalen Flächen oder ein Auseinanderlaufen auf horizontalen Flächen zu verhindern und größere Schichtdicken zu erzielen. Vorzugsweise wird eine derartige Substanz in einer Menge von 0,05 - 0,8 Gew.-%, bezogen auf die Masse, eingesetzt. In Frage kommen beispielsweise Silikonemulsionen, wie Antischaum SRE, oder Calcium- oder Aluminiumstearat.

Die erfindungsgemäße Masse wird vorzugsweise in Form eines Zweikomponentensystems formuliert, wobei die eine Komponente aus der Alkalisilikatlösung, gegebenenfalls mit den erwähnten Zusätzen, und die andere Komponente aus dem Alkalitrisilikatpulver, dem ebenfalls die genannten Zusätze zugemengt sein können, besteht. Vor der Beschichtung werden die beiden Komponenten miteinander vermischt. Die Auftragung erfolgt vorzugsweise in 2 - 3 mm dicken Schichten, die man jeweils trocknen läßt. Nach dem Auftragen der Brandschutzschicht wird vorzugswiese ein luft- und wasserdichter

- 5 -

alkalibeständiger Schlußanstrich aufgebracht, der beispielsweise aus einem Material auf Epoxidbasis besteht.
Man kann auch Metallfolien, wie Aluminiumfolien, auf die
erfindungsgemäßen Brandschutzschichten aufbringen.

Versuche haben ergeben, daß ein Zusatz von Perlit oder
Talkum zu den erfindungsgemäßen Brandschutzbeschichtungsmassen, wie er gemäß der DE-AS 2 022 572 vorgesehen ist,
zu einer Verschlechterung der Brandschutzfähigkeit führt.

Die folgenden Beispiele erläutern die Erfindung.

Beispiel 1 (Vergleichsbeispiel)

Es wurde gemäß der DE-OS 27 25 779 eine Mischung aus 50
Gew.-% Natriumsilikatlösung 37/40°Bé und 50 Gew.-% Natriumtrisilikatpulver (Wassergehalt 17,5 Gew.-% und Molverhältnis $SiO_2 : Na_2O = 3,3$) hergestellt und auf eine waagrecht
liegende Holzplatte mit einer Abmessung von 10 x 15 cm aufgetragen. Beim anschließenden Senkrechtstellen der Holzplatte floß die Beschichtung ab.

Beispiel 2 (Vergleichsbeispiel)

Gemäß der DE-OS 27 25 779 wurde eine Mischung aus 50
Gew.-Teilen Natriumsilikatlösung 40/42°Bé und 50 Gew.-
Teilen eines Natriumsilikatpulvers (Molverhältnis $SiO_2$ :
$Na_2O = 3,3$ und Wassergehalt 17,5 Gew.-%) hergestellt. Diese Mischung war aufgrund ihrer Konsistenz nicht auf eine
waagrecht liegende Holzplatte auftragbar und damit nicht
verarbeitbar.

Beispiel 3

Es wurde die gleiche Mischung wie in Beispiel 1 verwendet, mit der Ausnahme, daß 0,5 Gew.-% Aluminiumstearat in die Mischung eingearbeitet wurden. Die Mischung bestand aus 49,5 Gew.-% einer Natriumsilikatlösung 37/40°Bé, 50,0 Gew.-% eines Natriumtrisilikats mit einem Molverhältnis $SiO_2 : Na_2O = 3,3$ und einem Wassergehalt von 17,5 Gew.-% und 0,5 Gew.-% Aluminiumstearat.

Nach dem Beschichten der waagrecht liegenden Holzplatte und dem anschließenden Senkrechtstellen dieser Platte floß die Beschichtung nicht ab.

Beispiel 4

Es wurde die Mischung gemäß Beispiel 2 hergestellt, mit der Ausnahme, daß 0,1 Gew.-% eines Tensids, und zwar Triton BG 10 und 0,2 Gew.-% Antischaumemulsion SRE in die Mischung eingearbeitet wurden. Die Mischung bestand aus 49,7% Natriumsilikatlösung 40/42°Bé, 50,0 Gew.-% des Natriumtrisilikatpulvers, 0,1 Gew.-% Triton BG 10 und 0,2 Gew.-% Antischaumemulsion SRE.

Diese Mischung war bis zu 25 Minuten nach ihrer Herstellung verarbeitbar, d.h. sie konnte ohne Schwierigkeiten auf die waagrecht liegende Holzplatte aufgebracht werden und floß beim Senkrechtstellen der Platte nicht ab.

## Patentansprüche

1. Brandschutzbeschichtungsmasse auf der Grundlage eines Bindemittels aus einer Alkalisilikatlösung, dadurch gekennzeichnet, daß das Bindemittel aus einer Alkalisilikatlösung, wobei diese Lösung ein wasserglaslösliches nichtionogenes Tensid in gelöster Form enthält, und einem Alkalitrisilikatpulver besteht.

2. Masse nach Anspruch 1, dadurch gekennzeichnet, daß die Alkalisilikatlösung aus einer Lösung eines Alkalisilikats mit einem Verhältnis $Me_2O : SiO_2$ von 1 : 2,8 bis 3,5 besteht.

3. Masse nach den Ansprüchen 1 bis 2, dadurch gekennzeichnet, daß die Alkalisilikatlösung aus einer Natriumsilikatlösung oder aus einem Gemisch aus einer Natrium- und einer Kaliumsilikatlösung besteht.

4. Masse nach den Ansprüchen 1 bis 3, dadurch gekennzeichnet, daß sie außerdem Harnstoff, Hexamethylentetramin, Borax, Phosphate, Dicyandiamid und/oder Zucker oder zuckerähnliche Stoffe in einer Menge bis zu 10 Gew.-%, insbesondere 0,5 bis 7 Gew.-%, enthält.

5. Masse nach den Ansprüchen 1 bis 4, dadurch gekennzeichnet, daß das Alkalitrisilikatpulver aus Natriumsilikat besteht und das Verhältnis $Me_2O : SiO_2$ von 1 : 2,8 bis 3,5 beträgt.

6. Masse nach den Ansprüchen 1 bis 5, dadurch gekennzeichnet, daß der Alkalitrisilikatpulvergehalt der Alkali-

- 2 -

silikatlösung 25 bis 70 Gew.-%, insbesondere 40 bis
60 Gew.-%, beträgt.

7. Masse nach den Ansprüchen 1 bis 6, dadurch gekennzeichnet, daß sie eine die Thixotropie erhöhende Substanz
enthält.

8. Masse nach den Ansprüchen 1 bis 7, dadurch gekennzeichnet, daß das Tensid und die die Thixotropie erhöhende
Substanz jeweils in einer Menge von 0,05 bis 0,8 Gew.-%,
bezogen auf die Masse, vorliegen.

9. Masse nach den Ansprüchen 1 bis 8, dadurch gekennzeichnet, daß sie als Zweikomponentensystem formuliert ist,
wobei die eine Komponente aus der Alkalisilikatlösung,
gegebenenfalls mit den Zusätzen, und die zweite Komponente aus dem Alkalitrisilikatpulver, gegebenenfalls mit den
Zusätzen, besteht.